(19) **Europäisches Patentamt / European Patent Office / Office européen des brevets**

(11) **EP 4 528 505 A1**

(12) **EUROPEAN PATENT APPLICATION**
published in accordance with Art. 153(4) EPC

(43) Date of publication:
26.03.2025 Bulletin 2025/13

(21) Application number: 23826357.8

(22) Date of filing: 19.06.2023

(51) International Patent Classification (IPC):
*G06F 9/48* (2006.01)

(52) Cooperative Patent Classification (CPC):
G06F 9/48; G06F 9/50

(86) International application number:
PCT/CN2023/101119

(87) International publication number:
WO 2023/246709 (28.12.2023 Gazette 2023/52)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 25.06.2022 CN 202210731652
17.11.2022 CN 202211460871

(71) Applicant: Huawei Technologies Co., Ltd.
Shenzhen, Guangdong 518129 (CN)

(72) Inventors:
- XU, Hua
  Shenzhen, Guangdong 518129 (CN)
- BAO, Xiaoming
  Shenzhen, Guangdong 518129 (CN)
- ZHU, Ce
  Shenzhen, Guangdong 518129 (CN)
- SUN, Hongwei
  Shenzhen, Guangdong 518129 (CN)
- WANG, Xinglong
  Shenzhen, Guangdong 518129 (CN)

(74) Representative: Pfenning, Meinig & Partner mbB
Patent- und Rechtsanwälte
Theresienhöhe 11a
80339 München (DE)

(54) **DATA PROCESSING METHOD, APPARATUS, DEVICE, AND SYSTEM**

(57) A data processing method, an apparatus, a device, and a system are disclosed, and relate to the field of data processing. In the data processing system, a control node estimates a data volume of result data obtained after a plurality of second computing nodes execute a data processing task in parallel, and determines a quantity of reduce tasks based on the data volume and memory information of a first computing node that executes a reduce task; each second computing node partitions, based on the quantity, the result data generated by executing the data processing task, where each partition corresponds to one reduce task; and the first computing node performs reduce processing on data obtained after partitioning is performed by the plurality of second computing nodes. In this way, a storage capacity of a memory of the computing node that executes the reduce task is enabled to meet a data volume of the reduce task as far as possible, to avoid an excessively large or small data volume of a single reduce task. Therefore, the quantity of reduce tasks is flexibly and dynamically set before the reduce tasks are executed, thereby improving reduce task processing performance.

FIG. 2

**Description**

This application claims priority to Chinese Patent Application No. 202210731652.7, filed with the China National Intellectual Property Administration on June 25, 2022 and entitled "DATA PROCESSING METHOD", and Chinese Patent Application No. 202211460871.2, filed with the China National Intellectual Property Administration on November 17, 2022 and entitled "DATA PROCESSING METHOD, APPARATUS, DEVICE, AND SYSTEM", which are incorporated herein by reference in their entireties.

**TECHNICAL FIELD**

This application relates to the field of data processing, and in particular, to a data processing method, an apparatus, a device, and a system.

**BACKGROUND**

Currently, a control node in a computer cluster divides a job into a plurality of execution phases, and each execution phase includes a map (map) task and a reduce (reduce) task. After executing a plurality of map tasks, a computing node executes a plurality of reduce tasks in parallel for result data of the map tasks, thereby improving job processing performance. If a data volume of a single reduce (or reduction) task is excessively large, a data spill (spill) problem may occur due to an insufficient memory of the computing node. Consequently, reduce task processing performance is degraded. If the data volume of the single reduce task is excessively small, an excessively large quantity of reduce tasks are started, resulting in a large amount of overheads. Therefore, how to set a quantity of reduce tasks to improve reduce task processing performance is an urgent problem to be resolved.

**SUMMARY**

This application provides a data processing method, an apparatus, a device, and a system, to properly set a quantity of reduce tasks to improve reduce task processing performance.

According to a first aspect, a data processing method is provided. A data processing system includes a control node and a plurality of computing nodes. A plurality of second computing nodes in the plurality of computing nodes execute a data processing task in parallel to obtain result data; and the control node estimates a data volume of the result data, and obtains memory information of a first computing node that is in the plurality of computing nodes and that executes a reduce task. Further, the control node determines a quantity of reduce tasks based on the data volume and the memory information; each second computing node partitions, based on the quantity, the result data generated by executing the data processing task, where each partition corresponds to one reduce task; and the first computing node performs reduce processing on data obtained after partitioning is performed by the plurality of second computing nodes.

If the quantity of reduce tasks is pre-configured, problems of an excessively large or small data volume of the reduce task, large adjustment difficulty of the quantity of reduce tasks, and poor reduce task processing performance are caused. In a solution provided in this application, the quantity of tasks is automatically adjusted and optimized based on a parameter that affects reduce task processing performance, that is, the quantity of reduce tasks is determined based on the data volume of the result data generated after the data processing task is executed and the memory information of the computing node that executes the reduce task, so that a storage capacity of a memory of the computing node that executes the reduce task is enabled to meet a data volume of the reduce task as far as possible, thereby avoiding as far as possible a data spill problem caused by an insufficient memory when a data volume of a single reduce task is excessively large, and avoiding a problem of a large amount of overheads that is caused by excessive reduce tasks started when the data volume of the single reduce task is excessively small. Therefore, the quantity of reduce tasks is flexibly and dynamically set before the reduce tasks are executed, thereby improving the reduce task processing performance.

The control node may estimate, in a plurality of manners, a data volume of result data obtained after a current data processing task is executed.

With reference to the first aspect, in a possible implementation, the control node may estimate, based on historical data, the data volume of the result data obtained after the current data processing task is executed.

That the control node estimates a data volume of the result data generated after the data processing task is executed includes: obtaining historical data generated when a previously completed data processing task is executed, where the historical data includes a data volume of result data generated by the completed data processing task; and estimating, based on the historical data, the data volume of the result data generated after the data processing task is executed.

Because most tasks run periodically, estimating, based on a data volume of historical data of a task, the data volume of the result data obtained after the current data processing task is executed can ensure estimation accuracy and reduce resources occupied for estimating the data volume.

With reference to the first aspect, in another possible implementation, related data of the data processing task is collected in real time to estimate the data volume of the result data obtained after the current data processing task is executed.

That the control node estimates a data volume of the result data generated after the data processing task is executed includes: sampling, within a period of time after the plurality of second computing nodes start to execute the data processing task in parallel, the result data generated by the plurality of second computing nodes by executing the data processing task; and estimating, based on the sampled result data, the data volume of the result data generated after the data processing task is executed. The period of time may be a time used to sample the result data generated by the plurality of second computing nodes by executing the data processing task. In some embodiments, in a process in which the plurality of second computing nodes start to execute the data processing task in parallel, the result data generated by the plurality of second computing nodes by executing the data processing task is sampled. In some other embodiments, after the plurality of second computing nodes start to execute the data processing task in parallel and complete the execution, the result data generated by the plurality of second computing nodes by executing the data processing task is sampled.

With reference to the first aspect, in another possible implementation, that the control node estimates a data volume of the result data generated after the data processing task is executed includes: before the plurality of second computing nodes execute the data processing task, sampling to-be-processed data in the plurality of second computing nodes, and indicating the plurality of second computing nodes to process the sampled to-be-processed data; and estimating, based on a processing result of the to-be-processed data, the data volume of the result data generated after the data processing task is executed.

In this way, the control node uses less data to estimate an overall data volume of the data processing task, thereby reducing resources occupied for estimating the data volume.

With reference to the first aspect, in another possible implementation, the memory information is a memory size, and that the control node determines a quantity of reduce tasks based on the data volume and the memory information includes: dividing the data volume by the memory size and rounding up to obtain the quantity of reduce tasks.

With reference to the first aspect, in another possible implementation, a quantity of first computing nodes is equal to the quantity of reduce tasks, and one first computing node executes one reduce task.

With reference to the first aspect, in another possible implementation, a quantity of first computing nodes is less than the quantity of reduce tasks, and one first computing node executes a plurality of reduce tasks.

With reference to the first aspect, in another possible implementation, memory sizes of the first computing nodes are the same. Therefore, the control node determines, based on the memory size of the computing node, a data volume of a reduce task processed by each computing node, so that a storage capacity of a memory of the computing node that executes the reduce task meets a data volume of the reduce task as far as possible.

According to a second aspect, a control apparatus is provided. The apparatus includes modules configured to perform the method of the control node in the first aspect or any possible design of the first aspect.

According to a third aspect, a control device is provided. The control device includes at least one processor and a memory. The memory is configured to store a group of computer instructions; and when the processor is used as the control node in the first aspect or any possible implementation of the first aspect to execute the group of computer instructions, the operation steps of the method of the control node in the first aspect or any possible implementation of the first aspect are performed.

According to a fourth aspect, a data processing system is provided. The data processing system includes a control node and a plurality of computing nodes. The control node is configured to perform the method of the control node in the first aspect or any possible design of the first aspect; and the computing nodes are configured to perform the method of the computing nodes in the first aspect or any possible design of the first aspect.

According to a fifth aspect, a computer-readable storage medium is provided. The computer-readable storage medium includes computer software instructions. When the computer software instructions are run in a computing device, the computing device is enabled to perform the operation steps of the method in the first aspect or any possible implementation of the first aspect.

According to a sixth aspect, a computer program product is provided. When the computer program product runs on a computer, a computing device is enabled to perform the operation steps of the method in the first aspect or any possible implementation of the first aspect.

In this application, based on the implementations provided in the foregoing aspects, the implementations may be further combined to provide more implementations.

**BRIEF DESCRIPTION OF DRAWINGS**

FIG. 1 is a diagram of an architecture of a data processing system according to this application;
FIG. 2 is a schematic flowchart of a data processing method according to this application;
FIG. 3 is a diagram of a data processing process according to this application;
FIG. 4 is a diagram of a structure of a control apparatus according to this application; and
FIG. 5 is a diagram of a structure of a control device according to this application.

## DESCRIPTION OF EMBODIMENTS

For ease of understanding, main terms in this application are first explained.

Big data (big data) is a collection of data that cannot be captured, managed, and processed by a common software tool within a period of time. Because a large amount of data included in the big data is associated with each other, a data analysis method, model, or tool is used to analyze the big data and mine a data relationship in the big data, so that prediction or decision-making is performed based on the data relationship in the big data. For example, shopping trend data of a user is analyzed, and an item that may be purchased by the user is pushed to the user, thereby improving user shopping experience. Therefore, the big data has features such as a large data volume, a fast data growth speed, diversified data types, and a high utilization value. A single computing node cannot meet a computing requirement due to an extremely large data volume of a big data job (job). Usually, distributed processing is used to process data. The big data job may also be referred to as a big data service.

MapReduce (MapReduce) is a distributed programming model used to decompose a big data job into a map task and a reduce task. A plurality of computing nodes execute the map task to obtain intermediate data, and execute the reduce task for the intermediate data. The intermediate data may also be referred to as map data or shuffle data.

Shuffle (shuffle) refers to a task processing phase in a MapReduce model, that is, a process in which data is processed at a node in which a map task is located, and then is shuffled, according to a rule, to a node in which a reduce task is located. This phase usually generates a large amount of network transmission.

A task parallelism degree is used to indicate granularity of dividing a big data job. Due to a resource limitation of a single computing node and a processing duration requirement of a big data job, a quantity of reduce tasks in a task execution phase is determined based on the task parallelism degree. In each task execution phase, a plurality of computing nodes process a plurality of reduce tasks in parallel, thereby improving reduce task processing performance.

A spill (spill) mechanism is a mechanism in which when data processing is performed, if a memory does not have sufficient storage space for storing data during data processing, a part of data spills out to be stored in a magnetic disk. Although this mechanism can effectively alleviate a problem of an insufficient memory, performance of data processing may be significantly degraded due to a slow access speed of the magnetic disk.

A computer cluster (computer cluster) is a group of computers loosely or tightly connected for operating, which are usually configured to execute a large-scale job. A cluster is usually deployed to improve overall performance based on a task parallelism degree, and is more cost-effective than a single computer with a comparable speed or comparable availability. The computers are connected to each other through a network, and each computer runs an operating system instance of the computer. In most cases, each computer uses same hardware and a same operating system. In some cases, different operating systems may be used on different hardware.

To resolve a problem that reduce task processing performance is poor due to improper setting of a quantity of reduce tasks, this application provides a data processing method. To be specific, a plurality of second computing nodes in a plurality of computing nodes execute a data processing task in parallel to obtain result data; and a control node estimates a data volume of the result data, and obtains memory information of a first computing node that is in the plurality of computing nodes and that executes a reduce (reduce) task. Further, the control node determines a quantity of reduce tasks based on the data volume and the memory information; each second computing node partitions, based on the quantity, the result data generated by executing the data processing task, where each partition corresponds to one reduce task; and the first computing node performs reduce processing on data obtained after partitioning is performed by the plurality of second computing nodes. If the quantity of reduce tasks is pre-configured, problems of an excessively large or small data volume of the reduce task, large adjustment difficulty of the quantity of reduce tasks, and poor reduce task processing performance are caused. In a solution provided in this application, the quantity of tasks is automatically adjusted and optimized based on a parameter that affects reduce task processing performance, that is, the quantity of reduce tasks is determined based on the data volume of the result data generated after the data processing task is executed and the memory information of the computing node that executes the reduce task, so that a storage capacity of a memory of the computing node that executes the reduce task is enabled to meet a data volume of the reduce task as far as possible, thereby avoiding as far as possible a data spill problem caused by an insufficient memory when a data volume of a single reduce task is excessively large, and avoiding a problem of a large amount of overheads that is caused by excessive reduce tasks started when the data volume of the single reduce task is excessively small. Therefore, the quantity of reduce tasks is flexibly and dynamically set before the reduce tasks are executed, thereby improving the reduce task processing performance.

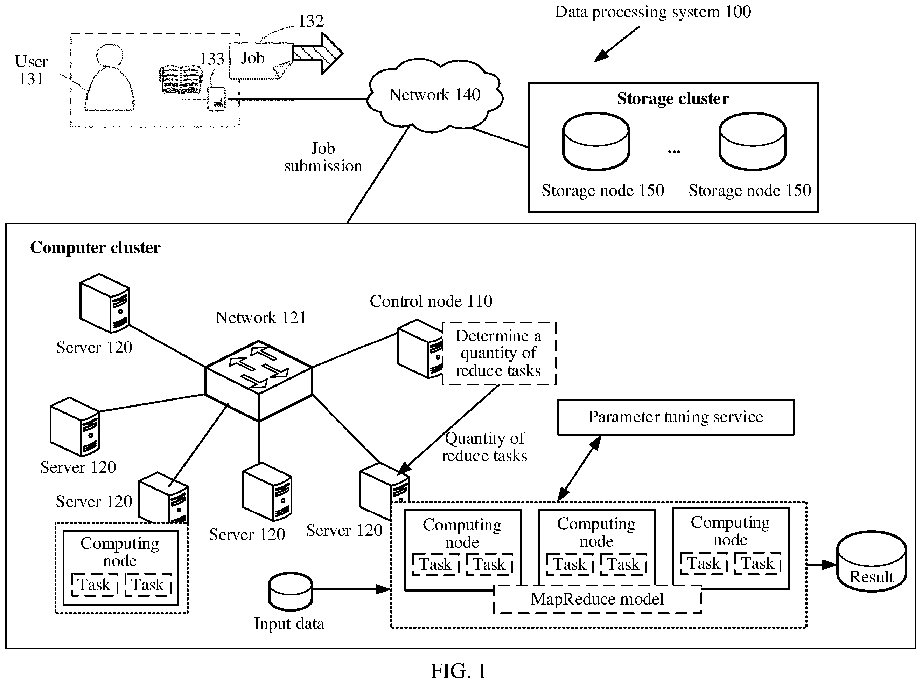

FIG. 1 is a diagram of an architecture of a data processing system according to this application. The data processing system may be an entity architecture that performs distributed processing on application data. As shown in FIG. 1, the data processing system 100 includes a control node 110 and a plurality of servers 120 connected to the control node 110. The plurality of servers 120 may constitute a computer cluster. The plurality of servers 120 may be interconnected through a network 121. The network 121 may be an internal network of an enterprise (for example, a local area network (Local Area Network, LAN)) or the Internet (Internet). Each server 120 includes a plurality of processors or processor cores, and a virtual machine or a container may also be deployed on the processor or the processor core. The control node 110 may allocate a task based on the processor, the processor core, the virtual machine, or the container. The processor or the processor core runs a process or a thread to execute a task (task). One computing node described in this application corresponds to the processor core, the virtual machine, or the container. The computing node may refer to a process or a thread, and one computing node is configured to execute at least one task.

In a computing cluster, a plurality of jobs are waiting to be executed. If excessive computing resources (for example, a plurality of computing nodes or one computing node) are allocated to a single job, performance of another job may be affected. Therefore, the control node is disposed in the computing cluster, and the control node may also be referred to as a manager. For example, the control node 110 may control a computing resource allocated to a to-be-executed job, so that a high-priority job can be preferentially executed. The control node 110 may monitor an execution state of a job, and change resource allocation for the job according to a policy.

The control node 110 is specifically configured to generate a job execution plan, that is, split one job into a plurality of tasks. These tasks may be allocated to a plurality of computing resources for execution. The plurality of tasks may be classified into a plurality of execution phases. Tasks in a same phase may be executed in parallel. All the tasks are scheduled and completed in parallel or in series. When all the tasks are completed, the job is completed. In some embodiments, the computing node may perform distributed processing on the job based on a MapReduce model.

The control node 110 indicates a second computing node that executes a map (map) task and a first computing node that executes a reduce (reduce) task. The map task and the reduce task may be set by a developer user. For example, the task includes operations such as addition, subtraction, weighting, string concatenation, and obtaining an intersection set or a union set between data. The second computing node reads sharded data. The second computing node executes the map task for the sharded data to obtain intermediate data, and stores the intermediate data. For example, the second computing node stores the intermediate data in storage space of the second computing node or a global memory pool. The first computing node reads the intermediate data. For example, the first computing node that executes the reduce task reads the intermediate data from storage space of the first computing node or the global memory pool. The first computing node executes the reduce task for the intermediate data to obtain a result of the reduce task, and stores the result of the reduce task. A storage medium of a computing node and a storage medium of a storage node in the data processing system constitute the global memory pool through unified addressing, and any node in the system can access storage space in the global memory pool. Storage space for storing the intermediate data is not limited in this application.

In this application, the control node 110 is further configured to estimate a data volume of result data generated after a data processing task is executed, and obtain memory information of the first computing node that is in a plurality of computing nodes and that executes the reduce task. Further, the control node determines a quantity of reduce tasks based on the data volume and the memory information, and indicates the second computing node that executes the data processing task to partition, based on the quantity, the result data generated by executing the data processing task, where each partition corresponds to one reduce task; and the first computing node performs reduce processing on data obtained after partitioning is performed by a plurality of second computing nodes. The partition is used to indicate the data obtained after the result data generated by executing the data processing task is divided based on the quantity of reduce tasks. The quantity of reduce tasks is equal to a quantity of partitions.

For example, it is assumed that the job is to classify a pile of fruits based on fruit types and count a quantity of each type of fruits. If a quantity of the pile of fruits is large, the pile of fruits may be classified into M piles of fruits. M map tasks are started, and each map task is used to count a quantity of each type of fruits in one of the M piles of fruits. If one reduce task is started to perform summation on quantities of each type of fruits in result data of the M map tasks, data spill may occur due to an insufficient memory of the computing node or processing duration may be long due to a large computing amount. If one reduce task is started for each type of fruits, for example, if the pile of fruits includes 100 types of fruits, 100 reduce tasks are started. Consequently, a quantity of started reduce tasks is excessively large, and a large amount of overheads are generated. Therefore, the result data of the M map tasks may be partitioned based on the fruit types, and N reduce tasks are started. Each reduce task is used to count a quantity of at least one type of fruits. For example, the 100 types of fruits are classified into five groups, five reduce tasks are started, and each reduce task is used to count quantities of 20 types of fruits. In some embodiments, different reduce tasks may be used to count different types of fruits. For example, if a quantity of a same type of fruits (for example, apples) in result data of each of the M map tasks is large, one reduce task may be separately started for this type of fruits for quantity counting. Another reduce task may be used to count quantities of at least two types of fruits in the result data of each of the M map tasks. Further, the control node 110 indicates one or more computing nodes to execute the N reduce tasks. When one computing node executes the N reduce tasks, the computing node sequentially executes the N reduce tasks. When a plurality of computing nodes execute the N reduce tasks, the plurality of computing nodes execute the N reduce tasks in parallel.

The job herein is usually a large-scale job that requires a large quantity of computing resources for parallel processing. Property and a quantity of jobs are not limited in this application. Most tasks are executed concurrently or in parallel, and some tasks need to depend on data generated by other tasks. A quantity of tasks and data of a task that can be executed in parallel are not limited in this application.

It should be noted that the job may be submitted to the control node 110 from any suitable source. In this application, a location for submitting the job is not limited, and a specific mechanism for submitting the job by a user is not limited. In FIG. 1, for example, a user 131 operates a client 133 to submit a job 132 to the control node 110. A client program may be installed on the client 133. The client 133 runs the client program to display a user interface (user interface, UI). The user 131 operates the user interface to access a distributed file system and a distributed database to obtain data, and indicates to process data of a big data job. The client 133 may be a computer connected to a network 140, or may be referred to as a workstation (workstation). Different clients may share network resources (such as a computing resource and a storage resource). In this example, the client 133 is connected to the control node 110 through the network 140, and the network 140 may be the Internet or another network. Therefore, the user may submit the job to the control node 110 from a remote location. The control node 110 may obtain input data from the database.

In some embodiments, the data processing system 100 may further provide a parameter tuning service, that is, provide storage, reading, processing, and the like of data of a completed data processing task, an interface for estimating a data volume of a current task, and the like. Functions of the parameter tuning service may be provided by the control node or the computing node in the data processing system 100. The computing node that executes the reduce task invokes the interface to implement the functions such as storing and reading the data of the completed data processing task and estimating a data volume of result data of a current data processing task, and perform dynamic partition adjustment.

For example, the computing node provides the parameter tuning service. The control node 110 obtains, from the computing node, the data volume of the result data generated after the data processing task is executed and the memory information of the computing node that executes the reduce task, and determines the quantity of reduce tasks. Alternatively, the computing node that provides the parameter tuning service determines the quantity of reduce tasks based on the data volume of the result data generated after the data processing task is executed and the memory information of the computing node that executes the reduce task, and feeds back the quantity of reduce tasks to the control node 110. The control node 110 does not need to determine the quantity of reduce tasks autonomously.

For another example, the computing node that provides the parameter tuning service may alternatively determine a data volume of a processing result of a plurality of map tasks based on a data volume of a historical map task and a data volume of a processing result of the historical map task, and feed back the data volume of the processing result of the plurality of map tasks to the control node 110. The control node 110 determines the quantity of reduce tasks based on the data volume of the processing result of the plurality of map tasks and the memory information of the computing node that executes the reduce task.

Optionally, the data processing system 100 may further include a storage cluster. The storage cluster includes at least two storage nodes 150. One storage node 150 includes one or more controllers, a network interface card, and a plurality of hard disks. The hard disk is configured to store data. For example, a job processing result is stored in the hard disk. For another example, the computing node reads to-be-processed data from the hard disk when executing the map task or the reduce task. The hard disk may be a magnetic disk or another type of storage medium, for example, a solid-state disk or a shingled magnetic recording hard disk. The network interface card is configured to communicate with the computing node included in the computer cluster. The controller is configured to write data into the hard disk or read data from the hard disk based on a data read/write request sent by the computing node. In a data read/write process, the controller needs to convert an address carried in the data read/write request into an address that can be identified by the hard disk. In some embodiments, the storage cluster stores and manages a large amount of data based on the distributed file system and the distributed database.

The following describes in detail implementations of a data processing method according to an embodiment of this application with reference to the accompanying drawings.

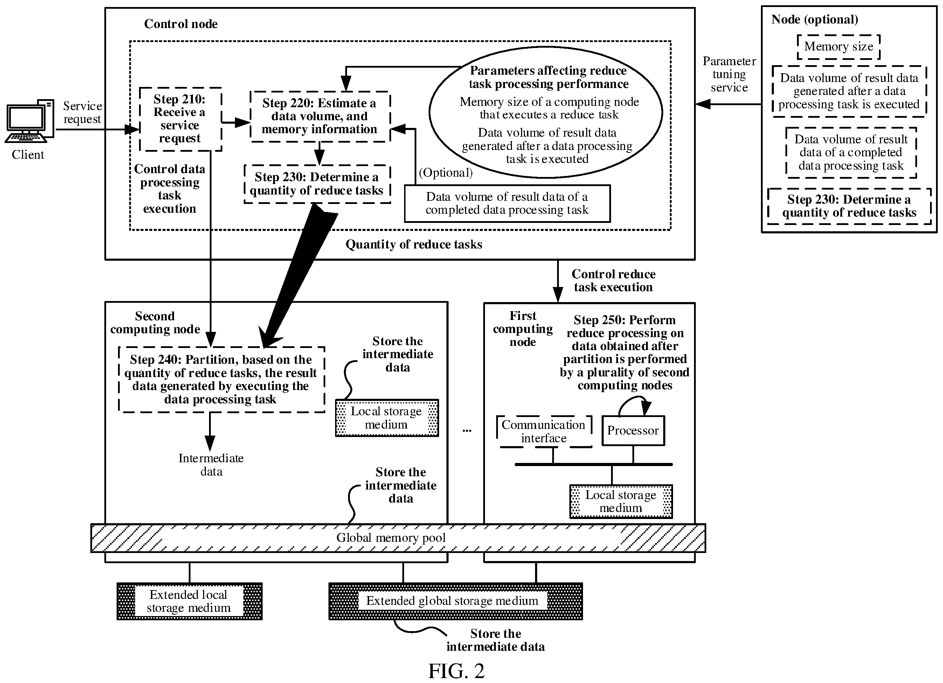

FIG. 2 is a schematic flowchart of a data processing method according to this application. Herein, it is assumed that a control node indicates a first computing node to execute a reduce task, and indicates a plurality of second computing nodes to execute a data processing task (for example, a map task). The control node and the computing nodes may be the control node 110 and the computing nodes in FIG. 1. As shown in FIG. 2, the method includes the following steps.

**Step 210: The control node obtains a service request.**

A client sends the service request to the control node in response to a user operation. The control node may receive, through a local area network or the Internet, the service request sent by the client. The service request may include a service identifier and service data. The service identifier is used to uniquely indicate a service. The service data may be data used by the computing node to perform big data distributed processing or identifier data indicating data of big data distributed processing.

The user operation may be an operation that a user operates a big data user interface to submit a big data job. The big data job includes a data analysis service, a data query service, a data modification service, and the like. For example, the big data job refers to analyzing personal data and purchasing behavior data of a customer to depict a user profile to implement customer classification, so that a targeted product or a discount product can be recommended to a particular customer, thereby improving customer satisfaction, strengthening a customer relationship, and the like. For another example, the big data job refers to analyzing a historical sales volume of a product to predict a future sales volume, and finding a reason for a decline in a sales volume or an increase in a sales volume to give a constructive suggestion for improving the sales volume.

For example, the control node determines to divide the service into a plurality of execution phases and determines a computing node for executing a task. Each phase includes a map task and a reduce task. A plurality of tasks may be executed in parallel in one execution phase. The control node may indicate an idle computing node in a system to execute a task; or select, from the system based on a computing requirement and a latency requirement required by the task, a computing node that meets the computing requirement and the latency requirement to execute the task. A method for scheduling, by the control node, a computing node for executing the task is not limited in this application.

In some embodiments, the control node sends a control indication to at least one computing node that executes a task, to indicate the computing node to execute the task for data indicated by the service request. For example, the control node sends the control indication to the second computing node, to indicate the second computing node to execute the map task. After the control node determines a quantity of reduce tasks based on a data volume of result data generated after the map task is executed and memory information of a computing node that executes a reduce task, the control node sends the control indication to the first computing node, to indicate the first computing node to execute the reduce task.

**Step 220: The control node estimates a data volume of result data generated after a data processing task is executed, and obtains memory information of a first computing node that is in a plurality of computing nodes and that executes a reduce task.**

If the data volume of the result data of the data processing task is large, when the first computing node executes the reduce task for the result data of the data processing task, because storage space of the first computing node cannot meet a data storage requirement when the reduce task is executed, data spill may be caused, and task processing performance may be degraded. Therefore, before the first computing node stores the result data of the data processing task, the control node may pre-estimate the data volume of the result data of the data processing task, to recombine the result data of the data processing task based on the data volume of the result data of the data processing task to obtain intermediate data, thereby avoiding problems such as data spill occurring when the reduce task is executed for the intermediate data, and improving reduce task processing performance.

Manner 1: The control node may collect the data volume of the result data of the data processing task in real time.

In some embodiments, within a period of time after the plurality of second computing nodes start to execute the data processing task in parallel, the control node samples the result data generated by the plurality of second computing nodes by executing the data processing task; and estimates, based on the sampled result data, the data volume of the result data generated after the data processing task is executed. The period of time may be a time used to sample the result data generated by the plurality of second computing nodes by executing the data processing task.

For example, after executing a map task, the computing node scans a data volume of a processing result of the map task, and reports the data volume of the processing result of the map task to the control node 110. The control node may obtain a data volume of a processing result of a plurality of map tasks.

For another example, after executing a map task, the computing node scans a processing result of the map task based on a proportion to obtain a data volume of scanned data, and reports the data volume of the scanned data to the control node 110; and the control node 110 estimates a data volume of the processing result of the map task based on the data volume of the scanned data. The proportion may be preset based on experience.

For another example, after executing a plurality of map tasks, the computing node scans a processing result of the plurality of map tasks based on a proportion, and reports a data volume of scanned map tasks to the control node 110; and the control node 110 estimates a data volume of the processing result of the map tasks based on the data volume of the scanned map tasks.

In some other embodiments, the control node estimates, based on a sampled data processing task, the data volume of the result data generated after the data processing task is executed. Specifically, before the plurality of second computing nodes execute the data processing task, to-be-processed data in the plurality of second computing nodes is sampled, and the plurality of second computing nodes are indicated to process the sampled to-be-processed data; and the data volume of the result data generated after the data processing task is executed is estimated based on a processing result of the to-be-processed data.

Manner 2: The control node may estimate a data volume of result data of a current data processing task based on a data volume of result data of a completed data processing task. To be specific, the control node obtains historical data generated when a previously completed data processing task is executed, and estimates, based on the historical data, the data volume of the result data generated after the data processing task is executed. The historical data includes a data volume of result data generated by the completed data processing task.

For example, the control node 110 trains a neural network based on a data volume of a historical map task and a data volume of a processing result of the historical map task, so that the neural network has a function of estimating a data volume of a processing result of a map task based on data of the map task. The control node 110 may input the data of the map task into the neural network, and output the data volume of the processing result of the map task.

For another example, the control node 110 establishes a fitting relationship based on a data volume of an executed historical map task and a data volume of a processing result of the historical map task, so that the control node 110 determines a data volume of a processing result of a plurality of map tasks based on a data volume of the plurality of map tasks and the fitting relationship. The fitting relationship meets the following Formula (1):

$$y=F(x) \hspace{6cm} \text{Formula (1)}$$

x represents a data volume of a map task, and y represents data of a processing result of the map task. An expression form of $F(x)$ is not limited in this embodiment. For example, $F(x)=ax+b$ or $F(x)=ax^2+b$, where a and b represent parameters, and a and b may be obtained through training based on the fitting relationship established based on the data volume of the historical map task and the data volume of the processing result of the historical map task.

**Step 230: The control node determines a quantity of reduce tasks based on the data volume and the memory information.**

The control node may receive the memory information of the first computing node that executes the reduce task. The memory information is a memory size. The storage space of the computing node that executes the reduce task is used to store at least one of data required for executing the reduce task, data generated in a task execution process, and a processing result of executing the reduce task. If the storage space of the computing node cannot meet the data storage requirement when the reduce task is executed, data spill may be caused, and reduce task processing performance may be degraded.

A plurality of first computing nodes that execute reduce tasks may have a same memory size. In this case, the control node may obtain the memory information of the first computing node, and determine the quantity of reduce tasks based on the memory information. For example, the control node divides the data volume by the memory size and then performs rounding (for example, rounds up or rounds down) to obtain the quantity of reduce tasks, so that data spill is avoided when the first computing node executes the reduce task for a partition obtained through division, thereby improving the reduce task processing performance. The quantity of reduce tasks meets the following Formula (2):

$$P>S/M \hspace{6cm} \text{Formula (2)}$$

P represents the quantity of reduce tasks, S represents the estimated data volume of the result data generated after the data processing task is executed, and M represents the memory size of the computing node that executes the reduce task.

**Step 240: After the plurality of second computing nodes that execute the data processing task execute the data processing task in parallel, each second computing node partitions, based on the quantity, the result data generated by executing the data processing task, where each partition corresponds to one reduce task.**

The control node indicates the second computing node that executes the data processing task to divide the result data of the data processing task based on the quantity of reduce tasks. After the plurality of second computing nodes execute the data processing task in parallel, each second computing node partitions, based on the determined quantity of reduce tasks, the result data generated by executing the data processing task, to obtain the intermediate data. Each partition corresponds to one reduce task. The second computing node stores the intermediate data to a storage location indicated by the control indication. For example, the control indication includes a physical address of the storage space for storing the intermediate data. The physical address indicates any one of storage space (for example, a local storage medium or an extended local storage medium) of the second computing node that executes the map task, storage space of another computing node other than the computing node that executes the map task in a computing cluster, storage space of a storage node in a storage cluster, storage space of a global memory pool, and storage space of an extended global storage medium.

The control node sends the control indication to the computing node that executes the map task, to indicate the computing node that executes the map task to divide the processing result of the map task based on the quantity of reduce tasks, to obtain the intermediate data (that is, data obtained after partitioning), and store the intermediate data. The intermediate data includes a plurality of data blocks, and a quantity of the plurality of data blocks represents the quantity of reduce tasks.

It should be noted that a sequence of determining the quantity of reduce tasks by the control node and executing the data processing task is not limited in this application, and the quantity of reduce tasks may be first determined. For example, the control node may estimate the data volume of the result data of the current data processing task based on the data volume of the result data of the completed data processing task.

**Step 250: The first computing node performs reduce processing on data obtained after partitioning is performed by the plurality of second computing nodes.**

The control node indicates the first computing node to execute the reduce task for the intermediate data, and the first computing node obtains the intermediate data from the storage space of the second computing node or obtains the intermediate data from the global memory pool, and executes the reduce task for the intermediate data.

In some embodiments, the control node indicates first computing nodes of a same quantity as that of reduce tasks to execute the reduce tasks, that is, one first computing node executes one reduce task.

In some other embodiments, the control node indicates first computing nodes of a quantity less than that of reduce tasks to execute the reduce tasks, that is, one first computing node executes a plurality of reduce tasks.

Therefore, after each map task is executed and before a processing result of the map task is stored, a data volume of the processing result of the map task is estimated, then a proper quantity of reduce tasks is automatically evaluated based on the data volume and the memory size of the computing node for the reduce task, and the computing node that executes the map task divides the processing result of the map task based on the quantity of reduce tasks to generate the intermediate data. In this way, the reduce task processing performance can be prevented as far as possible from being degraded by a data spill problem caused by an insufficient memory when a data volume of a single reduce task is excessively large, and a problem of a large amount of overheads that are caused by excessive reduce tasks started when the data volume of the single reduce task is excessively small can be avoided. Therefore, the quantity of reduce tasks is flexibly and dynamically set before the reduce tasks are executed, thereby improving the reduce task processing performance.

Optionally, that the control node determines the quantity of reduce tasks based on the estimated data volume of the result data generated after the data processing task is executed and the memory size of the computing node that executes the reduce task may alternatively be described as that the control node determines a task parallelism degree based on the estimated data volume of the result data generated after the data processing task is executed and the memory size of the computing node that executes the reduce task. The task parallelism degree is used to indicate a result of partitioning the result data generated by the data processing task.

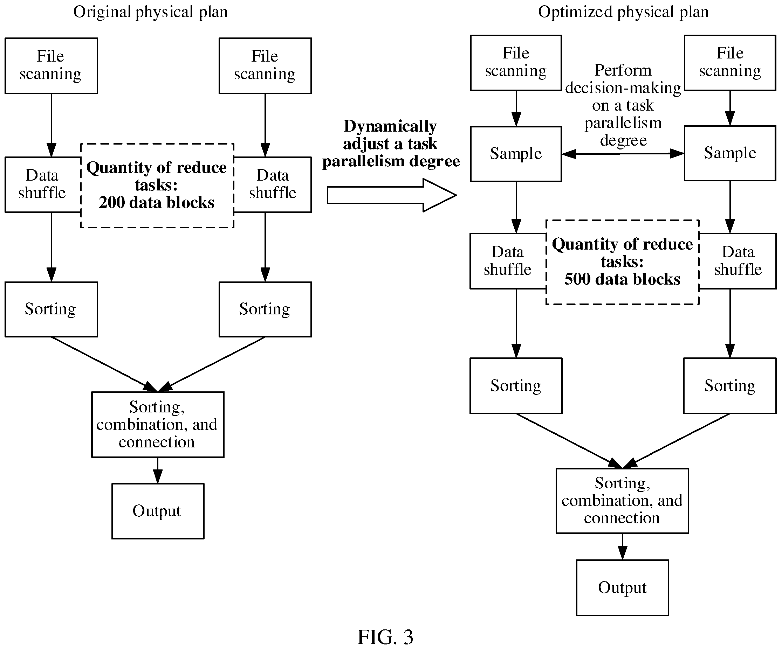

In another possible implementation, after the task parallelism degree is automatically adjusted, a change that occurs can be directly seen by using a user interaction interface of a job or a run log of a job, to determine whether the task parallelism degree is dynamically adjusted. For example, as shown in FIG. 3, a quantity of reduce tasks in an original physical plan indicates that a processing result of a map task is divided into 200 data blocks, and a quantity of reduce tasks in an optimized physical plan indicates that a processing result of a map task is divided into 500 data blocks.

It may be understood that, to implement the functions in the foregoing embodiment, the control node and the computing nodes include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on a particular application scenario and design constraint of the technical solutions.

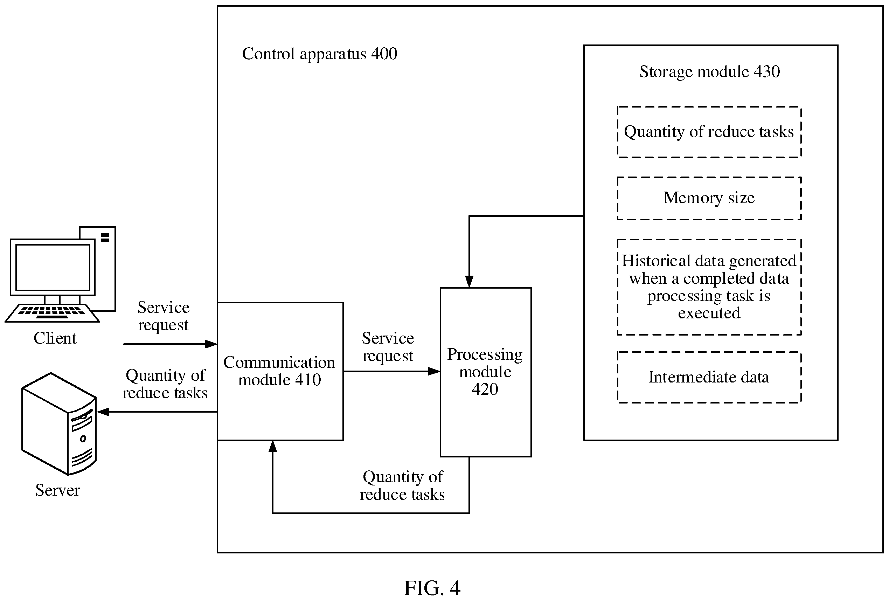

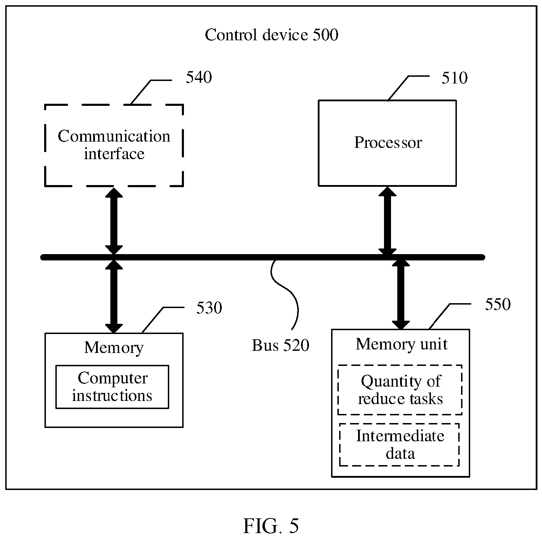

The foregoing describes in detail the data processing method provided in embodiments with reference to FIG. 1 to FIG. 3. The following describes a scheduling apparatus and a data processing apparatus provided in embodiments with reference to FIG. 4 and FIG. 5.

FIG. 4 is a diagram of a structure of a possible control apparatus according to an embodiment. The control apparatus may be configured to implement a function of the control node in the foregoing method embodiment, and therefore can also implement beneficial effects of the foregoing method embodiment. In this embodiment, the control apparatus may be the control node 110 shown in FIG. 1, or may be a module (for example, a chip) used in a server.

As shown in FIG. 4, the control apparatus 400 includes a communication module 410, a processing module 420, and a storage module 430. The control apparatus 400 is configured to implement the function of the control node 110 in the method embodiment shown in FIG. 1.

The communication module 410 is configured to obtain a service request. For example, the communication module 410 is configured to perform step 210 in FIG. 2.

The processing module 420 is configured to estimate a data volume of result data, obtain memory information of a first computing node that is in a plurality of computing nodes and that executes a reduce task, and determine a quantity of reduce tasks based on the data volume and the memory information. For example, the processing module 420 is configured to perform step 220 and step 230 in FIG. 2.

The storage module 430 is configured to store the quantity of reduce tasks, a memory size, a data volume of result data generated after a data processing task is executed, historical data generated when a completed data processing task is executed, intermediate data, and the like.

Optionally, the processing module 420 is specifically configured to: obtain historical data generated when a previously completed data processing task is executed, where the historical data includes a data volume of result data generated by the completed data processing task; and estimate, based on the historical data, the data volume of the result data generated after the data processing task is executed.

Optionally, the processing module 420 is specifically configured to: within a period of time after a plurality of second computing nodes start to execute the data processing task in parallel, sample the result data generated by the plurality of second computing nodes by executing the data processing task; and estimate, based on the sampled result data, the data volume of the result data generated after the data processing task is executed.

Optionally, the processing module 420 is specifically configured to: before the plurality of second computing nodes execute the data processing task, sample to-be-processed data in the plurality of second computing nodes, and indicate the plurality of second computing nodes to process the sampled to-be-processed data; and estimate, based on a processing result of the to-be-processed data, the data volume of the result data generated after the data processing task is executed.

Optionally, the processing module 420 is specifically configured to divide the data volume by the memory size and round up to obtain the quantity of reduce tasks.

FIG. 5 is a diagram of a structure of a control device 500 according to an embodiment. As shown in the figure, the control device 500 includes a processor 510, a bus 520, a memory 530, a communication interface 540, and a memory unit 550 (also referred to as a main memory (main memory) unit). The processor 510, the memory 530, the memory unit 550, and the communication interface 540 are connected by using the bus 520.

It should be understood that, in this embodiment, the processor 510 may be a CPU, or the processor 510 may be another general-purpose processor, a digital signal processor (digital signal processor, DSP), an ASIC, an FPGA or another programmable logical device, a discrete gate or a transistor logical device, a discrete hardware component, or the like. The general-purpose processor may be a microprocessor, any conventional processor, or the like.

Alternatively, the processor may be a graphics processing unit (graphics processing unit, GPU), a neural network processing unit (neural network processing unit, NPU), a microprocessor, an ASIC, or one or more integrated circuits configured to control program execution in the solutions of this application.

The communication interface 540 is configured to implement communication between the control device 500 and an external device or component. In this embodiment, when the control device 500 is configured to implement the function of the control node 110 shown in FIG. 1, the communication interface 540 is configured to send a control indication to indicate a computing node to execute a map task, or indicate a computing node to partition, based on a quantity of reduce tasks, result data generated by executing a data processing task. When the control device 500 is configured to implement the function of the computing node shown in FIG. 1, the communication interface 540 is configured to receive the control indication, and report a data volume of a processing result of the map task to the control node 110.

The bus 520 may include a path, configured to transfer information between the foregoing components (such as the processor 510, the memory unit 550, and the memory 530). In addition to a data bus, the bus 520 may further include a power bus, a control bus, a status signal bus, and the like. However, for clear description, various types of buses in the figure are marked as the bus 520. The bus 520 may be a peripheral component interconnect express (Peripheral Component Interconnect Express, PCIe) bus, an extended industry standard architecture (extended industry standard architecture, EISA) bus, a unified bus (unified bus, Ubus or UB), a computer express link (compute express link, CXL) bus, a cache coherent interconnect for accelerators (cache coherent interconnect for accelerators, CCIX) bus, or the like. The bus 520 may be classified into an address bus, a data bus, a control bus, or the like.

In an example, the control device 500 may include a plurality of processors. The processor may be a multi-CPU (multi-CPU) processor. The processor herein may be one or more devices, circuits, and/or computing units configured to process data (for example, computer program instructions). In this embodiment, when the control device 500 is configured to implement the function of the control node 110 shown in FIG. 1, the processor 510 may estimate a data volume of result data, obtain memory information of a first computing node that is in a plurality of computing nodes and that executes a reduce task, and determine a quantity of reduce tasks based on the data volume and the memory information. When the control device 500 is configured to implement the function of the computing node shown in FIG. 1, the processor 510 may partition, based on the quantity of reduce tasks, the result data generated by executing the data processing task, and perform reduce processing on data obtained after partitioning is performed by the computing node.

It should be noted that, in FIG. 5, only an example in which the control device 500 includes one processor 510 and one memory 530 is used. Herein, the processor 510 and the memory 530 are separately used to indicate a type of component or device. In a specific embodiment, a quantity of each type of components or devices may be determined based on a service requirement.

The memory unit 550 may correspond to the storage medium configured to store information such as the quantity of reduce tasks and the intermediate data in the foregoing method embodiment. The memory unit 550 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 530 may correspond to a storage medium, for example, a magnetic disk, such as a mechanical hard disk or a solid state disk, configured to store information such as computer instructions and a storage policy in the foregoing method embodiment.

The control device 500 may be a general-purpose device or a dedicated device. For example, the control device 500 may be an edge device (for example, a box carrying a chip with a processing capability), or the like. Optionally, the control device 500 may alternatively be a server or another device having a computing capability.

It should be understood that the control device 500 according to this embodiment may correspond to the control apparatus 400 in the embodiments, and may correspond to a corresponding body that performs any method in FIG. 2. In addition, the foregoing and other operations and/or functions of the modules in the control apparatus 400 are respectively used to implement corresponding procedures of the method in FIG. 2. For brevity, details are not described herein again.

The method steps in embodiments may be implemented in a hardware manner, or may be implemented by executing software instructions by a processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an ASIC. In addition, the ASIC may be located in the control device. Certainly, the processor and the storage medium may exist in the control device as discrete components.

All or some of the foregoing embodiments may be implemented by using software, hardware, firmware, or any combination thereof. When software is used for implementation, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any available medium that can be accessed by a computer, or a data storage device integrating one or more available media, for example, a server or a data center. The available medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD). The foregoing descriptions are merely specific implementations of this application, but are not intended to limit the protection scope of this application. A person skilled in the art can readily figure out various equivalent modifications or replacements within the technical scope disclosed in this application, and these modifications or replacements shall fall within the protection scope of this application. Therefore, the protection scope of this application shall be subject to the protection scope of the claims.

**Claims**

1. A data processing method, applied to a data processing system, wherein the data processing system comprises a control node and a plurality of computing nodes, and the method comprises:

   estimating, by the control node, a data volume of result data generated after a data processing task is executed, and obtaining memory information of a first computing node that is in the plurality of computing nodes and that executes a reduce reduce task;

determining, by the control node, a quantity of reduce tasks based on the data volume and the memory information;

executing, by a plurality of second computing nodes that are in the plurality of computing nodes and that execute the data processing task, the data processing task in parallel, wherein each second computing node partitions, based on the quantity, the result data generated by executing the data processing task, and each partition corresponds to one reduce task; and

performing, by the first computing node, reduce processing on data obtained after partitioning is performed by the plurality of second computing nodes.

2. The method according to claim 1, wherein the estimating, by the control node, a data volume of result data generated after a data processing task is executed comprises:

obtaining historical data generated when a previously completed data processing task is executed, wherein the historical data comprises a data volume of result data generated by the completed data processing task; and

estimating, based on the historical data, the data volume of the result data generated after the data processing task is executed.

3. The method according to claim 1, wherein the estimating, by the control node, a data volume of result data generated after a data processing task is executed comprises:

sampling, within a period of time after the plurality of second computing nodes start to execute the data processing task in parallel, result data generated by the plurality of second computing nodes by executing the data processing task; and

estimating, based on the sampled result data, the data volume of the result data generated after the data processing task is executed.

4. The method according to claim 1, wherein the estimating, by the control node, a data volume of result data generated after a data processing task is executed comprises:

before the plurality of second computing nodes execute the data processing task, sampling to-be-processed data in the plurality of second computing nodes, and indicating the plurality of second computing nodes to process the sampled to-be-processed data; and

estimating, based on a processing result of the to-be-processed data, the data volume of the result data generated after the data processing task is executed.

5. The method according to any one of claims 1 to 4, wherein the memory information is a memory size, and the determining, by the control node, a quantity of reduce tasks based on the data volume and the memory information comprises:

dividing the data volume by the memory size and rounding up to obtain the quantity of reduce tasks.

6. The method according to any one of claims 1 to 5, wherein a quantity of first computing nodes is equal to the quantity of reduce tasks, and one first computing node executes one reduce task.

7. The method according to any one of claims 1 to 5, wherein a quantity of first computing nodes is less than the quantity of reduce tasks, and one first computing node executes a plurality of reduce tasks.

8. A control apparatus, wherein the apparatus is used in a control node in a data processing system, the data processing system further comprises a plurality of computing nodes, and the apparatus comprises:

a processing module, configured to estimate a data volume of result data generated after a data processing task is executed, and obtain memory information of a first computing node that is in the plurality of computing nodes and that executes a reduce reduce task, wherein

the processing module is further configured to determine a quantity of reduce tasks based on the data volume and the memory information; and

the processing module is further configured to indicate each second computing node to partition, based on the quantity, the result data generated by executing the data processing task, and indicate the first computing node to perform reduce processing on data obtained after partitioning is performed by the plurality of second computing nodes, wherein each partition corresponds to one reduce task.

9. The apparatus according to claim 8, wherein when estimating the data volume of the result data generated after the data processing task is executed, the processing module is specifically configured to:

obtain historical data generated when a previously completed data processing task is executed, wherein the historical data comprises a data volume of result data generated by the completed data processing task; and estimate, based on the historical data, the data volume of the result data generated after the data processing task is executed.

10. The apparatus according to claim 8, wherein when estimating the data volume of the result data generated after the data processing task is executed, the processing module is specifically configured to:

sample, within a period of time after the plurality of second computing nodes start to execute the data processing task in parallel, result data generated by the plurality of second computing nodes by executing the data processing task; and estimate, based on the sampled result data, the data volume of the result data generated after the data processing task is executed.

11. The apparatus according to claim 8, wherein when estimating the data volume of the result data generated after the data processing task is executed, the processing module is specifically configured to:

before the plurality of second computing nodes execute the data processing task, sample to-be-processed data in the plurality of second computing nodes, and indicate the plurality of second computing nodes to process the sampled to-be-processed data; and estimate, based on a processing result of the to-be-processed data, the data volume of the result data generated after the data processing task is executed.

12. The apparatus according to any one of claims 8 to 11, wherein the memory information is a memory size, and when determining the quantity of reduce tasks based on the data volume and the memory information, the processing module is specifically configured to:
divide the data volume by the memory size and round up to obtain the quantity of reduce tasks.

13. The apparatus according to any one of claims 8 to 12, wherein a quantity of first computing nodes is equal to the quantity of reduce tasks, and one first computing node executes one reduce task.

14. The apparatus according to any one of claims 8 to 12, wherein a quantity of first computing nodes is less than the quantity of reduce tasks, and one first computing node executes a plurality of reduce tasks.

15. A control device, wherein the control device comprises a memory and at least one processor, the memory is configured to store a group of computer instructions, and when the processor executes the group of computer instructions, the operation steps of the control node in the method according to any one of claims 1 to 7 are performed.

16. A data processing system, wherein the data processing system comprises a control node and a plurality of computing nodes, the control node is configured to perform the operation steps of the control node in the method according to any one of claims 1 to 7, and the computing nodes are configured to perform the operation steps of the computing nodes in the method according to any one of claims 1 to 7.

FIG. 1

FIG. 2

Original physical plan

Optimized physical plan

```
         ┌──────────┐          ┌──────────┐
         │   File   │          │   File   │
         │ scanning │          │ scanning │
         └────┬─────┘          └────┬─────┘
              │                     │
              ▼                     ▼
         ┌──────────┐  ┌ ─ ─ ─ ─ ─ ─ ─ ─ ─   ┌──────────┐
         │   Data   │   Quantity of reduce │  │   Data   │
         │ shuffle  │        tasks:           │ shuffle  │
         └────┬─────┘   200 data blocks    │  └────┬─────┘
              │        └ ─ ─ ─ ─ ─ ─ ─ ─ ─        │
              ▼                                    ▼
         ┌──────────┐                         ┌──────────┐
         │ Sorting  │                         │ Sorting  │
         └────┬─────┘                         └────┬─────┘
              │                                    │
              └──────────────┐   ┌────────────────┘
                             ▼   ▼
                      ┌──────────────┐
                      │   Sorting,   │
                      │ combination, │
                      │     and      │
                      │  connection  │
                      └──────┬───────┘
                             │
                             ▼
                      ┌──────────────┐
                      │    Output    │
                      └──────────────┘
```

**Dynamically adjust a task parallelism degree** ⟹

Perform decision-making on a task parallelism degree

```
         ┌──────────┐                         ┌──────────┐
         │   File   │                         │   File   │
         │ scanning │                         │ scanning │
         └────┬─────┘                         └────┬─────┘
              │                                    │
              ▼                                    ▼
         ┌──────────┐                         ┌──────────┐
         │  Sample  │◄───────────────────────►│  Sample  │
         └────┬─────┘                         └────┬─────┘
              │                                    │
              ▼       ┌ ─ ─ ─ ─ ─ ─ ─ ─ ─         ▼
         ┌──────────┐  Quantity of reduce │    ┌──────────┐
         │   Data   │        tasks:            │   Data   │
         │ shuffle  │    500 data blocks   │   │ shuffle  │
         └────┬─────┘ └ ─ ─ ─ ─ ─ ─ ─ ─ ─     └────┬─────┘
              │                                    │
              ▼                                    ▼
         ┌──────────┐                         ┌──────────┐
         │ Sorting  │                         │ Sorting  │
         └────┬─────┘                         └────┬─────┘
              │                                    │
              └──────────────┐   ┌────────────────┘
                             ▼   ▼
                      ┌──────────────┐
                      │   Sorting,   │
                      │ combination, │
                      │     and      │
                      │  connection  │
                      └──────┬───────┘
                             │
                             ▼
                      ┌──────────────┐
                      │    Output    │
                      └──────────────┘
```

FIG. 3

FIG. 4

Control device 500

540

510

Communication interface

Processor

530

Memory

Computer instructions

Bus 520

550

Memory unit

Quantity of reduce tasks

Intermediate data

FIG. 5

<div align="center">

**INTERNATIONAL SEARCH REPORT**

</div>

| International application No. |
| --- |
| **PCT/CN2023/101119** |

**A. CLASSIFICATION OF SUBJECT MATTER**

G06F 9/48(2006.01)i

According to International Patent Classification (IPC) or to both national classification and IPC

**B. FIELDS SEARCHED**

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, ENTXT, IEEE, CNABS, CNTXT, CNKI: 归约, 规约, 任务, 数量, 划分, 预估, 估计, 切分, 分片, 内存, reduce, task, quantity, memory, size, vehicle, occupy, split, syncopate, carve, partition, plot

**C. DOCUMENTS CONSIDERED TO BE RELEVANT**

| Category* | Citation of document, with indication, where appropriate, of the relevant passages | Relevant to claim No. |
| --- | --- | --- |
| X | CN 103970520 A (INTERNATIONAL BUSINESS MACHINES CORP.) 06 August 2014 (2014-08-06) <br> description, paragraphs 0037-0120 | 1-16 |
| A | CN 111782385 A (EMC IP HOLDING COMPANY LLC) 16 October 2020 (2020-10-16) <br> entire document | 1-16 |
| A | CN 113342266 A (PUSAIWEI TECHNOLOGY (HANGZHOU) CO., LTD.) 03 September 2021 (2021-09-03) <br> entire document | 1-16 |
| A | CN 114510325 A (HUAWEI TECHNOLOGIES CO., LTD.) 17 May 2022 (2022-05-17) <br> entire document | 1-16 |
| A | US 2015365474 A1 (FUJITSU LIMITED) 17 December 2015 (2015-12-17) <br> entire document | 1-16 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 August 2023** | **12 September 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

<div align="center">

**INTERNATIONAL SEARCH REPORT**
Information on patent family members

</div>

International application No.

**PCT/CN2023/101119**

| Patent document cited in search report | | | Publication date (day/month/year) | Patent family member(s) | | | Publication date (day/month/year) |
|---|---|---|---|---|---|---|---|
| CN | 103970520 | A | 06 August 2014 | US | 2014215178 | A1 | 31 July 2014 |
| | | | | US | 9582334 | B2 | 28 February 2017 |
| | | | | US | 2017017569 | A1 | 19 January 2017 |
| | | | | US | 9720740 | B2 | 01 August 2017 |
| CN | 111782385 | A | 16 October 2020 | US | 2020319922 | A1 | 08 October 2020 |
| | | | | US | 11086668 | B2 | 10 August 2021 |
| CN | 113342266 | A | 03 September 2021 | | None | | |
| CN | 114510325 | A | 17 May 2022 | | None | | |
| US | 2015365474 | A1 | 17 December 2015 | JP | 2016004328 | A | 12 January 2016 |
| | | | | US | 2017078403 | A1 | 16 March 2017 |
| | | | | US | 10326842 | B2 | 18 June 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210731652

- CN 202211460871